Europäisches Patentamt

European Patent Office

Office européen des brevets

(11) Publication number: **0 234 074**
A1

(12) **EUROPEAN PATENT APPLICATION**

(21) Application number: 86301270.4

(22) Date of filing: 21.02.86

(51) Int. Cl.4: **B29C 47/10** , B29C 47/64 , C08F 255/02 , //(C08F255/02,230:08),(B29K23-/00,105:24)

(43) Date of publication of application:
02.09.87 Bulletin 87/36

(84) Designated Contracting States:
DE FR GB IT

(71) Applicant: CROMPTON & KNOWLES CORPORATION
345 Park Avenue
New York New York 10022(US)

(72) Inventor: Wheeler Jr., John Randolph
28 Walter Fish Avenue
Mystic Connecticut 06355(US)

(74) Representative: Mayes, Stuart David et al
BOULT, WADE & TENNANT 27 Furnival Street
London, EC4A 1PQ(GB)

(54) Manufacture of elongate cross-linked products.

(57) A method for the manufacture of a cross-linked extruded elongate product from polyethylene or other suitable polymer. The polymer is fed into the hopper of a screw extrusion machine. The polymer is heated and melted while being conveyed through the barrel of the screw extruder. A liquid silane composition which comprises a modified vinyl functional silane, a free-radical generator, and a condensation catalyst is added into the melted polymer. The melted polymer and the liquid silane composition are then mixed and blended to obtain a uniform blended mixture thereof. The blended mixture is then extruded through an extrusion die to form an elongate product which is then subjected to the action of moisture and heat until the polymer in the elongate product is cross-linked. The method is of use in the formation of electric cables and pipes.

The invention also includes a system of apparatus designed for carrying out such a method.

FIG. 1

## MANUFACTURE OF ELONGATE CROSS-LINKED PRODUCTS

This invention relates to the manufacture of extruded elongate products, especially but not exclusively, electric cables and pipes, that are of carbon chain polymers cross-linked by the use of hydrolysable unsaturated silane. In the past such products have been formed by first reacting the polymer with the hydrolysable unsaturated silane in the presence of a free-radical generator such as a peroxide and afterwards exposing the grafted material to the effects of moisture and heat and a silanol condensation catalyst. Suitable reagents for this process have been described in U.S. Patent No. 3,646,155 which issued on February 29, 1972. Since the issuance of that patent it has become known that this process is applicable to a variety of polymers other than polyethylene and the modified polyethylenes referred to in that specification. Examples of such other polymers are chlorinated polyethylene and a wide range of olefin copolymers which can be processed and in the practice of the present invention the reaction conditions set forth in the above identified U. S. Patent need not in all cases be strictly adhered to. In the process of the above identified patent the polyethylene is mixed with an organic silicon derivative in the presence of an anti-oxidant and a peroxide chemical interaction occurs upon that mixture. The purpose of this operation is to "graft" a free silane radical onto the linear polyethylene chain. This grafting process takes place whenever the polyethylene and the organic silicon derivative comes into contact but the product must be dried before it is mixed with an appropriate catalyst which must be stored separately. Thereafter the cross-linked graft co-polymer is mixed with the catalyst and the resulting product is extruded onto a cable or into a suitable elongated product.

The extruded product is subsequently cross-linked by immersion in hot water or saturated steam and the operation can take several hours depending upon the thickness of the insulation and the temperature of the water or steam.

An improvement on the above identified process is disclosed in U. S. Patent No. 4,117,195 issued on September 26, 1978 to Peter Swarbrick et al. In this process the grafting and the mixing states are combined into a single operation and the preliminary agranulation step is eliminated. In this process polyethylene or another suitable polymer which is capable of being cross-linked by the use of hydrolysable unsaturated silane is metered into a screw extrusion machine together with the compounding ingredients which comprise a hydrolysable unsaturated silane, a free-radical generator and a silanol condensation catalyst. All of these ingredients are blended with the polymer in the barrel of the extruder and then the temperature of the mixture is raised sufficiently to effect grafting of the silane groups to the polymer. The mixture is then melted and extruded from the extruder through an extrusion die to form an elongated shaped product. This product is then cross-linked by the action of moisture.

While the method of U. S. Patent No. 4,117,195 is an improvement over the method of U. S. Patent No. 3,646,155, it still has a number of disadvantages. For example, this process requires a very expensive screw extrusion machine which has a very long barrel to give the material time to mix, melt, homogenize, and graft within the barrel of the extruder. For example, this process requires an extruder which has a length to diameter ratio of 28 or 30 to 1 in order to produce a melted, blended polymer ready for extrusion and for cross-linking. It is believed that one reason for this is that the heating is very erratic where the liquid is injected with the solid articles into the barrel or the hopper before the polymer is heated. Thus it is believed that uneven grating takes place before the polymer begins to melt or is melted to any substantial degree.

In addition to the drawbacks noted before, the process of U. S. Patent No. 4,117, 195 also requires very expensive dosimetry equipment for each of the compounding ingredients must be carefully metered into the extruder so as to provide the proper ratio of compounding ingredients and the polymer.

An additional drawback to the prior art process is the requirement that the manufacturer utilizing this process is required to purchase, store and handle a multiplicity of ingredients.

It would be desirable to overcome the shortcomings of the prior art as discussed above.

In accordance with this invention a method of making a cross-linked elongate extruded product comprises the step of metering into the hopper of a screw extruder, a polymer such as polyethylene, for example. All of the polymers disclosed in U. S. Patent No. 3,646,155, and U. S. Patent No. 4,117,195 can be used in the present process. The polymer is fed into the hopper usually in pellet form but could be in powder form as well. In any event, the polymer, after being fed into the extruder, is conveyed by the screw of the extruder through the barrel of the extruder. At the same time the polymer is heated and melted until all or substantially all of the polymer is melted. After the polymer is melted a liquid silane composition comprising a modified functional silane, a free radical generator and a condensation catalyst, is injected into the melted polymer.

The melted polymer and the liquid silane composition are forced by the screw of the extruder into a mixing and blending section which may be a part of the extruder or an extension thereof. The melted polymer and the liquid silane composition are uniformly mixed and blended immediately after the liquid silane composition is injected into the melted polymer. The blended mixture of polymer and the silane composition is then forced through an extrusion die to form an elongate product of a required final shape. Thereafter the elongate product is subjected to the action of moisture and heat This produces a cross-linking of the polymer in the elongate product.

By using the method outlined herein, the extruder used to carrying out this method at least in general needs to have a length to diameter ratio of only about 20 to 1 in order to produce the melted, blended polymer ready for extrusion and cross-linking. This is to be contrasted with the process in U. S. Patent No. 4,117,195 which requires a much larger length to diameter ratio as set forth above.

This liquid silane composition used may be that manufactured and sold by Union Carbide of Danbury, Connecticut under the trade name SILCAT R and it is described by the manufacturer as modified vinyl functional silane containing peroxide and condensation catalysts. This product has the following physical properties as described by the manufacturer.

Physical form Clear liquid
Boiling Point (760 mm Hg) 120°C (248°F)
Flash Point (Open cup ASTM D-29) 31°C (88°F)
Autoignition temp. (ASTM D-268 -58 T) 206°C - (403°F)
Specific Gravity (25°C/25°C) 0.970 -0.974
Viscosity at 20°C 0.8cS
Colour (Gardner) 1

According to the manufacturer, SILCAT R should be stored in a closed container hermatically sealed to exclude moisture and when pumping SILCAT R out of the drum, care should be taken not to introduce moist air into the container. To avoid moisture contamination the manufacturer recommends that a drying tube or a nitrogen blanket be used. The manufacturer further recommends that SILCAT R be handled in well-ventilated area and kept away from sparks or open fire and that due to its latent reactivity that it not be stored at temperatures higher than 40° Centrigade.

The manufacturer of this compound recommends its use in the process of U. S. Patent No. 4,117,195. Therefore it is assumed that the functional ingredients of this compound are the same as those disclosed in U. S. Patent No. 4,117,195.

The present invention will now be described in further detail by way of example only and with reference to the accompanying drawings, in which:

Figure 1 is a front elevation, partially in section, of a system of apparatus designed to carry out the process of the invention;

Figure 2 is a plan view of a portion of the system shown in Figure 1 taken along line 2-2 of Figure 1;

Figure 3 is a partial view of an alternative system for carrying out the process; and

Figure 4 is an exploded perspective view of the mixing and blending section of the system.

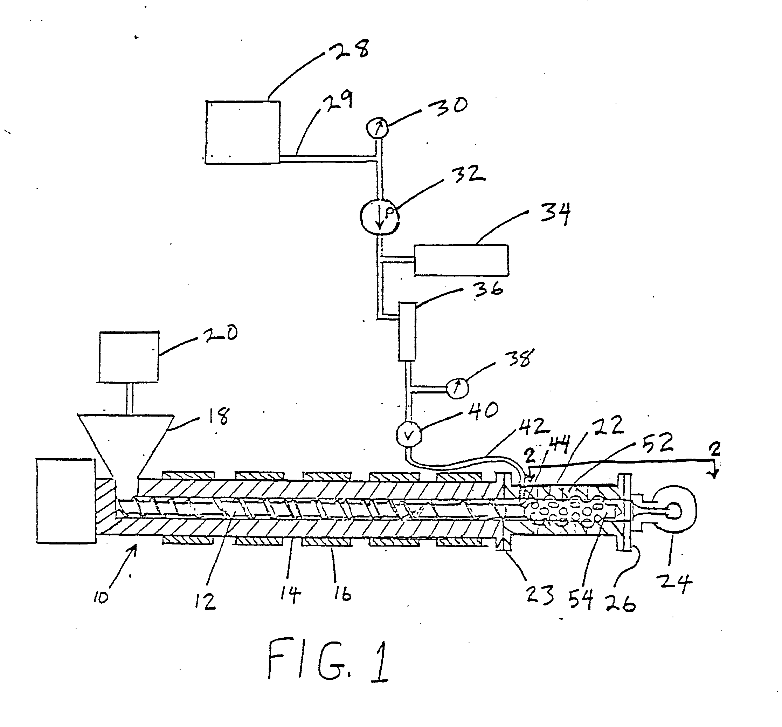

In Figure 1 there is shown the overall apparatus or system for carrying out the process of the invention. In this drawing the extruder 10 comprises a screw 12 which is mounted for rotation within a barrel 14 for conveying polymer from the hopper 18 through the extruder barrel. It should be noted that the screw 12 as shown is a barrier screw such as that shown in U.S. Patent No. 4,341,474. However, the extruder screw does not have to be of the barrier type for this invention.

Disposed about barrel 14 are a series of heaters 16 so as to provide the necessary heat to melt the polymer being transported through the barrel. This system is also provided with a hopper feeder designed to supply polymer in pellet form generally but sometimes in powder form as well. The details of the hopper feeder do not constitute a part of this invention and are well known in the art and need not be described in greater detail herein.

As shown in Figure 1 the barrel 14 is provided at its outlet end with flanges 23 to which are bolted a cavity transfer mixing device 22. The rotor 54 of this device (as shown in Figure 1) is drivingly connected to screw 12 so as to rotate therewith. However, as will be noted hereinafter, this driving relationship is not necessary to the invention. Rotor 54 rotates within a housing or stator 52 and functions to mix polymer delivered to it by the screw. During the operation of the extruder, polymer fed into hopper 18 in pellet form, is fully melted by the time it reaches the end of the flight of the screw.

The system of the invention also provides means for injecting the liquid silane composition into the melted polymer before the melted polymer is delivered into the cavity transfer mixer. This mechanism comprises a reservoir 28 which is supplied with the liquid silane composition. The liquid silane composition is delivered by a line 29 to an injection port 44 in the housing or stator 52 just before the polymer enters the cavity transfer mixer section. The liquid silane composition supply system also comprises a suction gauge 30 for measuring the suction inlet pressure of a diaphram metering pump 32 which pumps the liquid silane composition from reservoir 28 to injection port 44. Disposed within the line after the pump 32 is an accumulator 34 which functions to accumulate the excess liquid silane composition pumped by pump 32 and to supply such excess during the pulsing operation of pump 32. That is, accumulator 34 serves to smooth out the pulsing pumping action of pump 32 so as to supply a constant predetermined flow of the liquid silane composition.

Following the accumulator is a flow transducer 36 which measures the flow rate of the liquid silane composition and an injection pressure gauge 38 which measures the pressure of the silane compound flowing through line 29. Downstream from the injection pressure gauge is a cut-off valve 40 which is adapted to be manually turned off during periods of inoperation.

The liquid silane composition drawn from reservoir 28 traverses line 29 and through valve 40 and a flexible hose 42 to the injection port 44. Injection port 44 is provided with a check valve that permits the liquid silane composition to flow only onto the interior of the cavity transfer mixing housing or stator. This is necessary to prevent the melted polymer from flowing into flexible hose 42 and line 29.

As seen in Figure 2, the polymer is extruded from the cavity transfer mixer 22 into a crosshead die 24 which is bolted to flanges 26 of the cavity transfer mixer. A cable 46 is fed through the crosshead and during its passage through the crosshead is supplied with a sheath or coating 48 of the polymer.

The operation of the device of Figure 1 will now be described. Suitable polymer is supplied to hopper 18 by hopper feeder 20. This polymer as noted above may be in powder or pellet form. The screw 12 is rotated by drive means, not shown, to transport the polymer along barrel 14, heat is supplied by heaters 16 to melt the polymer so that the polymer is fully melted by the time it reaches the end of the flight of the screw or flanges 23. The liquid silane composition is inserted through injection port 44 into the melted polymer and the mixture of polymer and liquid silane composition is then forced into the cavity transfer mixer 22. The mixture of the liquid silane composition and the polymer is evenly blended during its passage through the cavity transfer mixer. In crosshead 24 the polymer and liquid silane composition mixture is shaped to form a layer of insulation 48 about a cable 46 passing through the crosshead with the polymer by a suitable die which is a part of the crosshead and which determines the thickness of the polymer applied to the cable.

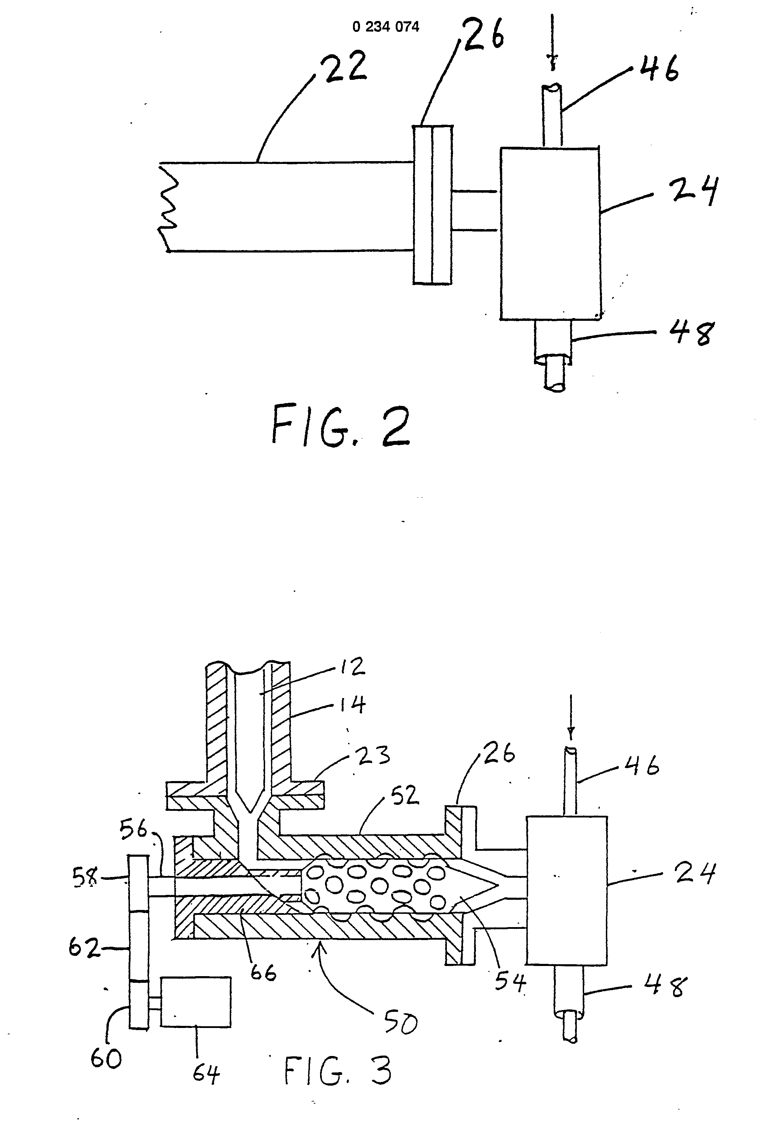

Figure 3 illustrates an alternative arrangement of the cavity transfer mixer in connection with the extruder barrel. Figure 3 is plan view of the alternative arrangement and comprises a cavity transfer mixer 50 whose longitudinal axis extends at right angles to the longitudinal axis of the extruder screw 12. However, this angle is not critical to the operation of the mechanism. In this embodiment the rotor 54 is mounted on a rotor shaft 56 which is provided with a pulley 58 on the end of it. Pulley 58 is driven by motor 64 through pulley 60 and belt 62. With this arrangement it is possible to drive the rotor of the cavity transfer mixer to a different rate than the rotational speed of the extruder screw 12, to provide for better controlled optimized mixing of the polymer and the liquid silane composition. The liquid silane composition injection port is not seen in Figure 3 since Figure 3 is a plan view in partial section. However, the injection port injects the silane composition into the cavity transfer mixer adjacent to flange 23 and after the end of extruder screw 12. The combined melted polymer and liquid silane composition is distributed into the cavity transfer mixer by flow distributor 66. The liquid silane composition and the melted polymer are then blended and mixed in the cavity transfer mixer and then forced into crosshead 24 as described in Figure 1 and 2.

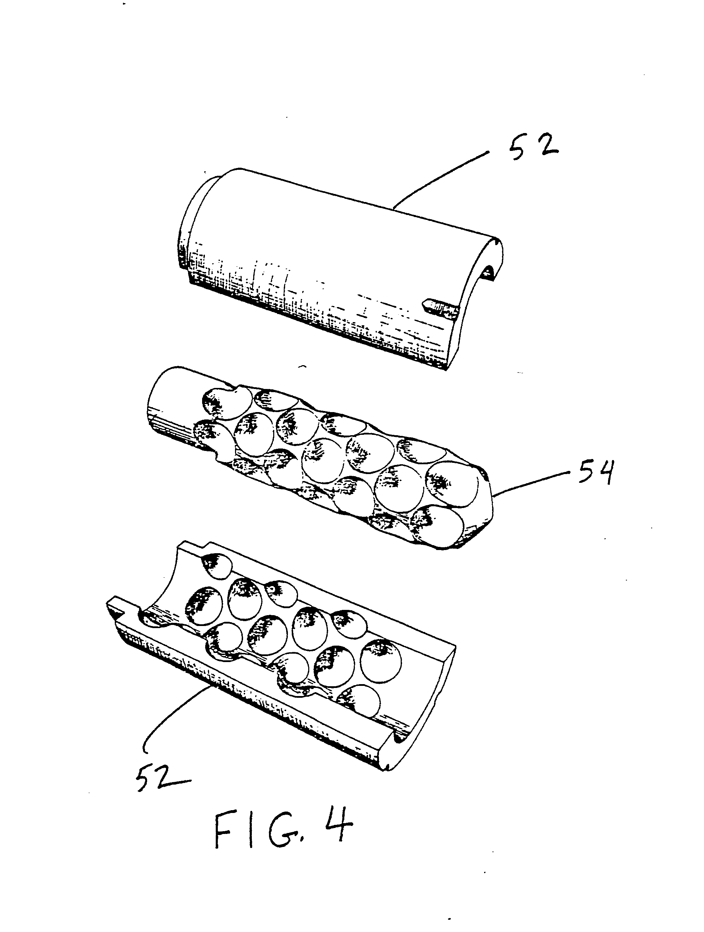

Figure 4 is an exploded view of the cavity transfer mixing device shown in perspective. There stator 52 comprises two clam shelled sections which when bolted together surrounds rotor 54. Both the stator and the rotor have series of concave depressions which cooperate to assure complete mixing of the polymer and the silane compound. Details of this mixer form no part of this invention. Details of the cavity transfer mixer are contained in United Kingdom Patent Application No. 8030586 and the device is also described in the July/August 1982 issue of the European Rubber Journal in an article by G. M. Gale and R. S. Hindmarch titled "RAPRA'S Glittering Prize". This device is further described in an article in the August 1982 issue of Elastomerics titled "Applications of the Cavity Transfer Mixer to Rubber Extrusion" by R. S. Hindmarch and G. M. Gale.

Instead of the rotary cavity transfer mixer as described above, the system of the invention can also utilize a static mixer of the type disclosed in U. S. Patent No. 3,871,624 which was issued March 18, 1975 to Max Huber et al or that disclosed and described in U.S. Patent No. 3,785,620 which was issued January 15, 1974 to Max Huber. Static mixers of this type can also perform the mixing operation of the invention but the rotary cavity transfer mixer is preferred.

While the exact amount of the liquid silane composition necessary to cross-link the polymer will vary from one polymer to another and from the degree of cross-linking desired, it is proposed that one combination would be for each 200 pounds of polymer that from 3 to 4 pounds (1.36 to 1.81 kg), preferably 3.30 pounds (1.5 kg) of the liquid silane composition be used or that the liquid silane composition be present in the mixture at from 1 to 2% by weight, preferably 1.62%.

## Claims

1. A method of making a cross-linked extruded elongate product which comprises:

(a) metering into the hopper of a screw extruder which has a barrel and a screw extending from end to end of the barrel, a polymer capable of being cross-linked by the use of a liquid silane composition which comprises a modified vinyl functional silane, a free-radical generator, and a condensation catalyst;

(b) conveying the polymer through the barrel of the extruder;

(c) heating and melting while conveying the polymer through the barrel of the screw extruder;

(d) adding a liquid silane composition comprising a modified vinyl functional silane, a free-radical generator, and a condensation catalyst into the melted polymer;

(e) mixing and blending said silane composition and said melted polymer to obtain a uniform blended mixture thereof;

(f) extruding said blended mixture through an extrusion die to form an elongate product of a required final shape; and

(g) subjecting said elongate product to the action of moisture until said polymer is cross-linked.

2. A method of making a cross-linked extruded elongate product as claimed in claim 1 wherein the polymer is fed into the hopper of the extruder in pellet form.

3. A method of making a cross-linked extruded elongate product as claimed in claim 1 or claim 2 wherein the polymer is conveyed through the extruder by a screw having a solids channel and a melt channel separated by a barrier flight wherein the polymer is collected into the melt channel as it melts during its transportation through the extruder barrel.

4. A method of making a cross-linked extruded elongate product as claimed in any one of claims 1 to 3 wherein the liquid silane composition is injected into the polymer after substantially all of said polymer is melted.

5. A method of making a cross-linked extruded elongate product as claimed in any one of claims to 1 to 4 wherein the liquid silane composition and the polymer are mixed and blended in a rotary cavity transfer mixer before said mixture is extruded.

6. An apparatus for making a cross-linked extruded elongate product which comprises:

(a) a screw extruder which comprises a barrel and a screw extending from end to end of the barrel for transporting polymer and a hopper for receiving polymer;

(b) heating means for heating the barrel of the extruder to melt the polymer while it is being conveyed through the barrel of the extruder by the screw:

(c) means for melting a pre-determined amount of a cross-linking additive and for injecting said additive into the melted polymer;

(d) means disposed on said extruder barrel for receiving melted polymer with the cross-linking additive injected therein for mixing and blended said polymer and said additive;

(e) an extrusion die adapted to shape the said blended mixture of polymer and additive to form an elongate product of a required final shape; and

(f) means for bringing said elongated product into contact with moisture to provide cross-linking of said elongated product.

7. An apparatus for making a cross-linked extruded elongate product as claimed in claim 6 wherein the means for mixing and blending the polymer and said additive comprises a rotary cavity transfer mixer.

8. An apparatus for making a cross-linked extruded elongate product as claimed in claim 7 wherein the rotary cavity transfer mixer comprises a stator and a rotor and the rotor is operatively driven by the extruder screw.

9. An apparatus for making a cross-linked extruded elongated product as claimed in claim 7 wherein the rotary cavity transfer mixer comprises a stator and rotor with the longitudinal axis of the rotor extending at right angles to the longitudinal axis of the screw and wherein said rotor is driven independently of the screw.

10. An apparatus for making a cross-linked extruded elongate product as claimed in claim 6 wherein the means for mixing and blending the said polymer and said additive comprises a stationary static mixing device.

11. An apparatus for making a cross-linked extruded elongate product as claimed in any one of claims 1 to 10, wherein said screw extruder has length-to-diameter ratio of about 20 to 1.

12. A product whenever prepared using a method as claimed in any one of claims 1 to 5.

FIG. 1

0 234 074

FIG. 2

FIG. 3

52

54

52

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 163 865 (UNION CARBIDE CORP.) <br><br> * Figure 1; abstract; page 3, line 23 - page 4, line 2; page 19, lines 9-11,17-20; page 29, line 22 * | 1,2,4-8,11,12 | B 29 C 47/10 <br> B 29 C 47/64 <br> C 08 F 255/02 // <br> B 29 K 23/00 <br> B 29 K 105/24 <br> (C 08 F 255/02 <br> C 08 F 230:08 ) |
| Y | | 3,9,10 | |
| Y | EP-A-0 003 701 (SOCIETE INDUSTRIELLE DE LIAISONS ELECTRIQUES) <br> * Figure 2; page 3, line 38 - page 4, line 25 * | 1,4,6, 12 | |
| Y | US-A-4 302 409 (MILLER et al.) <br><br> * Figure 1 * | 1,4,6, 12 | TECHNICAL FIELDS SEARCHED (Int. Cl.4) |
| Y,D | US-A-4 117 195 (SWARBRICK et al.) <br> * Abstract * | 1,4,6, 12 | B 29 C <br> C 08 F |
| Y,D | US-A-3 646 155 (SCOTT) <br><br> * Example 2 * | 1,4,6, 12 | |
| Y,D | US-A-4 341 474 (WHEELER) <br> * Abstract * | 3 | |
| | --- -/- | | |

The present search report has been drawn up for all claims

| Place of search | Date of completion of the search | Examiner |
|---|---|---|
| THE HAGUE | 21-10-1986 | ASHLEY G.W. |

| DOCUMENTS CONSIDERED TO BE RELEVANT | | | Page   2 | |
|---|---|---|---|---|
| Category | Citation of document with indication, where appropriate, of relevant passages | Relevant to claim | CLASSIFICATION OF THE APPLICATION (Int. Cl 4) | |
| Y | EP-A-0 048 819   (PAUL TROESTER MASCHINENFABRIK) * Figures; page 5 * | 9 | | |
| Y | US-A-4 478 516   (KESSLER) * Figure 1 * | 10 | | |
| Y | US-A-4 201 480   (BRAND) * Figure 1 * | 10 | | |
| A | EP-A-0 048 590   (RUBBER AND PLASTICS RESEARCH ASSOCIATION OF GREAT BRITAIN) * Abstract; figure 1 * | 5-8 | | |
| | | | TECHNICAL FIELDS SEARCHED (Int. Cl.4) | |

The present search report has been drawn up for all claims

| Place of search THE HAGUE | Date of completion of the search 21-10-1986 | Examiner ASHLEY G.W. |
|---|---|---|